# EUROPEAN PATENT SPECIFICATION

(11) **EP 2 714 808 B1**
(45) Date of publication and mention of the grant of the patent: **26.10.2016**
(21) Application number: 12790321.9
(22) Date of filing: 23.05.2012
(51) Int. Cl.: C08L 79/04, C09D 5/08, C09D 179/04, C08G 73/06

(54) **ANTI-CORROSION COATINGS**
ANTIREFLEXIONSBESCHICHTUNGEN
REVÊTEMENTS ANTICORROSION

(30) Priority: 23.05.2011 US 201161489049 P
(43) Date of publication of application: 09.04.2014
(73) Proprietor: Coatings Foreign IP Co. LLC, Wilmington, DE 19801 (US)
(72) Inventor: PERCEC, Simona, Philadelphia, Pennsylvania 19103 (US); FERGUSON, Kayleigh J., Greenville, Delaware 19807 (US)
(74) Representative: Kopf Westenberger Wachenhausen Patentanwälte PartG mbB
(86) International application number: PCT/US2012/039063
(87) International publication number: WO 2012/162348

(56) References cited:
- US-A- 5 997 714
- US-A1- 2004 005 464
- US-A1- 2008 305 341
- US-A1- 2008 305 341
- US-B1- 6 762 238
- NGUYEN THI LE H ET AL: "Corrosion protection and conducting polymers: polypyrrole films on iron", ELECTROCHIMICA ACTA, ELSEVIER SCIENCE PUBLISHERS, BARKING, GB, vol. 46, no. 26-27, 24 August 2001 (2001-08-24), pages 4259-4272, XP027144727, ISSN: 0013-4686 [retrieved on 2001-08-24]

## Description

### FIELD OF INVENTION

The present invention is directed to anti-corrosion coatings. It is particularly directed to coatings comprising a monomer, such as pyrrole, aniline, thiophene, or their analogs, and a resin. These coatings can be used with substrates such as cold-rolled steel and other metals to inhibit surface oxidation.

### BACKGROUND OF INVENTION

Current organic coatings for corrosion control are typically obtained from aqueous formulations of barrier resins and specific additives. The preferred technology for the application of organic coatings in the automotive industry is via electro-coating, since it can coat areas of formed or cast metal parts that are otherwise difficult to reach via other techniques, such as spray-coating. A typical cathodic electrocoating process is carried out by immersing a substrate that serves as a cathode in a cationic electrocoating composition and applying a voltage. The deposition of a coating layer on the substrate involves an electrochemical reaction, and the coating layer that has deposited on the substrate surface upon voltage application acts as an insulator, serving to limit the thickness of the coating.

Due to their electroactivity and electronic conductivity, electroconductive polymers (ECPs) are believed to participate in electronic interactions when they are in contact with active metals such as ferrous alloys. Such interactions are thought to alter metal corrosion behavior, and there is interest in using ECPs as anti-corrosion coatings on substrates such as cold-rolled steel (CRS). However, conducting polymers are insoluble in ordinary solvents and infusible because they decompose before melting, making it difficult to form ECP-derived coatings via standard solution- or melt-based processes.

Thus, there remains a need for a process to apply ECPs to metal substrates to provide anti-corrosion properties.

### STATEMENT OF INVENTION

This invention is directed to process for producing a modified resin, said process comprising the step of reacting a mixture comprising:
(a) a monomer selected from the group consisting of pyrrole, substituted pyrrole, aniline, substituted aniline, thiophene and substituted thiophene;
(b) a primer comprising a resin selected from the group consisting of acrylic, polyester, epoxy, melamin/formaldehyde and polyurethane resins;
(c) potassium tetraoxalate; and
(d) ammonium persulfate
to form a modified resin.

This invention is also directed to the modified resin and to substrates coated with the modified resin.

This invention is also directed to coating compositions comprising a solvent and the modified resin.

This invention is also directed to coated substrates, wherein the coating comprises the modified resin.

### DETAILED DESCRIPTION

The features and advantages of the present invention will be more readily understood, by those of ordinary skill in the art, from reading the following detailed description.

The use of numerical values in the various ranges specified in this application, unless expressly indicated otherwise, are stated as approximations as though the minimum and maximum values within the stated ranges were both proceeded by the word "about." In this manner, slight variations above and below the stated ranges can be used to achieve substantially the same results as values within the ranges. Also, the disclosure of these ranges is intended as a continuous range including every value between the minimum and maximum values. Suitable temperatures are expressed as a lower and an upper temperature limit, and include all temperatures within those limits.

As used herein:
The term "(meth)acrylate" means methacrylate or acrylate.
The term "two-pack coating composition", also known as 2K coating composition, refers to a coating composition having two packages that are stored in separate containers and sealed to increase the shelf life of the coating composition during storage. The two packages are mixed just prior to use to form a pot mix, which has a limited pot life, typically ranging from a few minutes (15 minutes to 45 minutes) to a few hours (4 hours to 8 hours). The pot mix is then applied as a layer of a desired thickness on a substrate. After application, the layer dries and cures at ambient or at elevated temperatures to form a coating having desired coating properties, such as, adhesion, high gloss, mar-resistance and resistance to environmental etching.
The term "crosslinkable component" refers to a component having "crosslinkable functional groups" that are functional groups positioned in each molecule of the compounds, oligomer, polymer, the backbone of the polymer, pendant from the backbone of the polymer, terminally positioned on the backbone of the polymer, or a combination thereof, wherein these functional groups are capable of crosslinking with crosslinking functional groups (during a curing step) to produce a coating in the form of crosslinked structures. One of ordinary skill in the art would recognize that certain crosslinkable functional group combinations would be excluded, since, if present, these combinations would crosslink among themselves (self-crosslink), thereby destroying their ability to crosslink with the crosslinking functional groups. A workable combination of crosslinkable functional groups refers to the combinations of crosslinkable functional groups that can be used in coating applications excluding those combinations that would self-crosslink.

Typical crosslinkable functional groups can include hydroxyl, thiol, isocyanate, thioisocyanate, acid or polyacid, acetoacetoxy, carboxyl, primary amine, secondary amine, epoxy, anhydride, ketimine, aldimine, or a workable combination thereof. Some other functional groups such as orthoester, orthocarbonate, or cyclic amide that can generate hydroxyl or amine groups once the ring structure is opened can also be suitable as crosslinkable functional groups.

The term "crosslinking component" refers to a component having "crosslinking functional groups" that are functional groups positioned in each molecule of the compounds, oligomer, polymer, the backbone of the polymer, pendant from the backbone of the polymer, terminally positioned on the backbone of the polymer, or a combination thereof, wherein these functional groups are capable of crosslinking with the crosslinkable functional groups (during the curing step) to produce a coating in the form of crosslinked structures. One of ordinary skill in the art would recognize that certain crosslinking functional group combinations would be excluded, since, if present, these combinations would crosslink among themselves (self-crosslink), thereby destroying their ability to crosslink with the crosslinkable functional groups. A workable combination of crosslinking functional groups refers to the combinations of crosslinking functional groups that can be used in coating applications excluding those combinations that would self-crosslink. One of ordinary skill in the art would recognize that certain combinations of crosslinking functional group and crosslinkable functional groups would be excluded, since they would fail to crosslink and produce the film forming crosslinked structures. The crosslinking component can comprise one or more crosslinking agents that have the crosslinking functional groups.

Typical crosslinking functional groups can include hydroxyl, thiol, isocyanate, thioisocyanate, acid or polyacid, acetoacetoxy, carboxyl, primary amine, secondary amine, epoxy, anhydride, ketimine, aldimine, orthoester, orthocarbonate, cyclic amide or a workable combination thereof.

It would be clear to one of ordinary skill in the art that certain crosslinking functional groups crosslink with certain crosslinkable functional groups. Examples of paired combinations of crosslinkable and crosslinking functional groups can include: (1) ketimine functional groups crosslinking with acetoacetoxy, epoxy, or anhydride functional groups; (2) isocyanate, thioisocyanate and melamine functional groups each crosslinking with hydroxyl, thiol, primary and secondary amine, ketimine, or aldimine functional groups; (3) epoxy functional groups crosslinking with carboxyl, primary and secondary amine, ketimine, or anhydride functional groups; (4) amine functional groups crosslinking with acetoacetoxy functional groups; (5) polyacid functional groups crosslinking with epoxy or isocyanate functional groups; and (6) anhydride functional groups generally crosslinking with epoxy and ketimine functional groups.

The term "binder" or "film-forming binder" as used herein refers to film-forming constituents of a coating composition. Typically, a binder can comprise a crosslinkable component and a crosslinking component in that the crosslinkable component can react with the crosslinking component to form crosslinked structures, such as coating films. The binder in this disclosure can further comprise other polymers that are essential for forming the crosslinked films having desired properties. Other components, such as solvents, pigments, catalysts, rheology modifiers, antioxidants, UV stabilizers and absorbers, leveling agents, antifoaming agents, anti-cratering agents, or other conventional additives are typically not included in the term. One or more of those components can be included in the coating composition.

This disclosure is directed to a process for producing an anti-corrosion resin. The process can comprise the steps of:
A1) reacting a mixture comprising:
   (a) a monomer selected from the group consisting of pyrrole, substituted pyrrole, aniline, substituted aniline, thiophene, substituted thiophene, and a combination thereof;
   (b) a primer comprising a resin selected from the group consisting of acrylic, polyester, epoxy, melamin/formaldehyde, polyurethane resins, and a combination thereof;
   (c) potassium tetraoxalate; and
   (d) ammonium persulfate
   to form a modified resin.
   The reaction can be conducted in the presence of a metal substrate. Any of the metal substrate disclosed herein can be suitable.
   The process can further comprise the steps of:
A2) isolating the modified resin from the mixture to form an isolated modified resin.
   The process can further comprise the steps of:
A3) dissolving the isolated modified resin in one or more solvents to form a modified resin solution.

The one or more solvents can comprise methy isobutyl ketone (MIBK). In one example, the solvents can comprise in a rnage of from 80% to 100% of methy isobutyl ketone (MIBK).

This disclosure is further directed to an anti-corrosion resin produced by the process disclosed herein and a coating composition comprising the anti-corrosion resin disclosed herein and one or more solvents.

This disclosure is further directed to coated article comprising a metal substrate and one or more coating layers, wherein at least one of the coating layers is formed from the anti-corrosion resin or coating composition of this disclosure. The coated article can be a vehicle, vehicle part, tank, rail, building, appliance or appliance part. The metal substrate can comprise one or more metals selected from steel, aluminum, copper, iron, alloys, or a combination thereof.

This disclosure is further directed to a coating process for producing an anti-corrosion coating layer over a metal substrate. The process can comprise the steps of:
B1) applying an anti-corrosion resin over said metal substrate to form a wet coating layer thereon, wherein said anti-corrosion resin comprises a modified resin formed by reacting a mixture comprising:
   (a) a monomer selected from the group consisting of pyrrole, substituted pyrrole, aniline, substituted aniline, thiophene, substituted thiophene, and a combination thereof;
   (b) a primer comprising a resin selected from the group consisting of acrylic, polyester, epoxy, melamin/formaldehyde, polyurethane resins, and a combination thereof;
   (c) potassium tetraoxalate; and
   (d) ammonium persulfate.

The coating process can further comprise the step of:
B2) curing the wet coating layer at an ambient temperature in a range of from 18°C to 35°C, at an elevated temperature in a range of from 35°C to 250°C, or a combination thereof, to form the anti-corrosion coating layer over the metal substrate.

The anti-corrosion resin can be formed in the presence of the metal substrate forming the wet coating layer thereon, as describe herein.

In the coating process disclosed herein, the anti-corrosion resin can also be formed in the absence of the metal substrate and subsequently applied over the metal substrate forming the wet coating layer thereon.

The anti-corrosion resin can be formed by a resin producing process comprising the steps of:
B1a) reacting said mixture in the absence of said metal substrate to form a modified resin;
B1 b) isolating said modified resin from the mixture to form an isolated modified resin; and
B1c) mixing said isolated modified resin with one or more solvents to form said anti-corrosion resin.

The one or more solvents comprise methy isobutyl ketone (MIBK). The metal substrate can comprise one or more metals selected from steel, aluminum, copper, iron, alloys, or a combination thereof. The metal substrate can be free from Zn pre-coating. In one example, a substrate of cold rolled steel (CRS) can be free from Zn pre-coating.

The anti-corrosion resin can be applied over said metal substrate by electro-coating, spray coating, drawdown coating, roller coating, dipping, soaking, brushing, or a combination thereof.

This disclosure is further directed to a coated article produced by the coating process disclosed herein. The coated article can be a vehicle, vehicle part, tank, rail, building, appliance or appliance part.

Suitable monomers can include pyrrole, substituted pyrroles, aniline, substituted anilines, thiophene and substituted thiophenes. Suitable substitutents include alkyl- and aryl-sulfonate groups, aryl groups, alkylthiols, sulfonic acid groups, alkoxy groups, thiol groups, alkyl groups, and carboxylate groups.

Suitable substituted pyrroles include:
1*H*-pyrrole-1-propionic acid;
11-(1 H-pyrrol-1-yl)undecane-1-thiol;
1-(4-methylphenyl)-1 H-pyrrole;
1-(4-methoxyphenyl)-1 H-pyrrole; and
1-(4-nitrophenyl)-1 H-pyrrole.

Suitable thiophenes include:
3,4-dimethoxythiophene;
3,4-ethylenedioxythiophene;
hydroxymethyl ethylenedioxythiophene; and
ethylenedioxythiophenecarboxylic acid.

In some embodiments, the mixture further comprises an acid selected from the group consisting of:
octyl-benzene sulfonic acid;
camphor sulfonic acid;
m-sulfamic acid;
oxalic acid;
poly(styrene sulfonic) acid;
dinonylnaphthalene sulfonic acid; and
nitrilotris(methylene)-triphosphonic acid.

In some embodiments, the mixture comprises more than one monomer. In one embodiment, pyrrole and a substituted pyrrole are used in combination. In one embodiment, a pyrrole and an aniline are used in combination.

Suitable substrates for this invention include substrates wherein the surfaces comprise metal or metal alloys. Suitable substrates include blasted steel, cold-rolled steel, iron, copper, aluminum, alloys such as ferrous alloys or other metals or alloys.

The polyester suitable for this invention can be linear polyesters, branched polyesters, or a combination thereof. The polyesters can have one or more crosslinkable functional groups. The polyesters may be saturated or unsaturated and optionally, may be modified with fatty acids. These polyesters can be the esterification product of one or more polyhydric alcohols, such as, alkylene diols and glycols; and carboxylic acids such as monocarboxylic acids, polycarboxylic acids or anhydrides thereof, such as, dicarboxylic and/or tricarboxylic acids or tricarboxylic acid anhydrides.

The polyester can also be highly branched copolyesters. The highly branched copolyester can have one or more crosslinkable function groups. The highly branched copolyester can be conventionally polymerized from a monomer mixture containing a dual functional monomer selected from the group consisting of a hydroxy carboxylic acid, a lactone of a hydroxy carboxylic acid and a combination thereof; and one or more hyper branching monomers.

Conventional methods for synthesizing polyesters are known to those skilled in the art. Examples of the conventional methods can include those described in U.S. Patent No. 5,270,362 and U.S. Patent No. 6,998,154.

The acrylic polymer suitable for this invention can have a weight average molecular weight (Mw) in a range of from 2,000 to 100,000, and can contain crosslinkable functional groups, for example, hydroxyl, amino, amide, glycidyl, silane and carboxyl groups. These acrylic polymers can be straight chain polymers, branched polymers, graft copolymers, or other polymers. In one example, the acrylic polymer can have a weight average molecular weight in a range of from 5,000 to 50,000. In another example, the acrylic polymer can have a weight average molecular weight in a range of from 5,000 to 25,000. Typical example of useful acrylic polymers can be polymerized from a plurality of monomers, such as acrylates, methacrylates, derivatives of acrylates or methacrylates, or a combination thereof.

The acrylic polymers can generally be polymerized by free-radical copolymerization using conventional processes well known to those skilled in the art, for example, bulk, solution or bead polymerization, in particular by free-radical solution polymerization using free-radical initiators.

The acrylic polymer can contain (meth)acrylamides. Typical examples of such acrylic polymers can be polymerized from monomers including (meth)acrylamide. In one example, such acrylic polymer can be polymerized from (meth)acrylamide and alkyl (meth)acrylates, hydroxy alkyl (meth)acrylates, (meth)acrylic acid and one of the aforementioned olefinically unsaturated monomers.

The crosslinking component can comprise one or more crosslinking agents. The crosslinking agents that are suitable for the coating composition of this invention can include compounds having crosslinking functional groups. Examples of such compounds can include organic polyisocyanates, melamine, or other compound containing any of the aforementioned crosslinking functional groups. Examples of organic polyisocyanates include aliphatic polyisocyanates, cycloaliphatic polyisocyanates, aromatic polyisocyanates and isocyanate adducts.

Suitable epoxy resins include commercial epoxy resins, such as CorMax® VI, Epoxy/Amine resin, ElectoShield™, available from E. I. du Pont de Nemours and Co., Wilmington, DE, USA, under respected trademarks or registered trademarks.

Melamine resins can also be suitable. Any melamine resins suitable for coating can be used.

Typically, the coating composition of this disclosure can further contain a catalyst to reduce curing time and to allow curing of the coating composition at ambient temperatures. The ambient temperatures are typically referred to as temperatures in a range of from 18°C to 35°C. Typical catalysts can include dibutyl tin dilaurate, dibutyl tin diacetate, dibutyl tin dichloride, dibutyl tin dibromide, triphenyl boron, tetraisopropyl titanate, triethanolamine titanate chelate, dibutyl tin dioxide, dibutyl tin dioctoate, tin octoate, aluminum titanate, aluminum chelates, zirconium chelate, hydrocarbon phosphonium halides, such as, ethyl triphenyl phosphonium iodide and other such phosphonium salts, and other catalysts or mixtures thereof known to those skilled in the art.

The coating composition of this disclosure can comprise one or more solvents. Typically the coating composition can comprise up to 95% by weight, based on the weight of the coating composition, of one or more solvents. Typically, the coating composition of this disclosure can have a solid content in the range of 20-80 % by weight, of 50-80 % by weight, or of 60-80 % by weight, all based on the total weight of the coating composition.

Suitable solvents include: aromatic hydrocarbons, such as toluene and xylene; ketones, such as acetone, methyl ethyl ketone, methyl isobutyl ketone, methyl amyl ketone and diisobutyl ketone; esters, such as ethyl acetate, *n*-butyl acetate, and isobutyl acetate; and combinations thereof.

The coating composition can be waterborne or solvent-borne. A waterborne coating composition can comprise 20-80 % water, based on the total weight of the coating composition. A waterborne coating composition can also comprise one or more of the aforementioned organic solvents. A solvent-borne coating composition can comprise one or more of the aforementioned organic solvents and 0-20 % water, based on the total weight of the coating composition.

Typically, when the coating composition of this disclosure is utilized as a pigmented coating composition, it contains pigments in a pigment to binder weight ratio of 1/100 to 350/100. The coating composition can be used as a basecoat or topcoat, such as a colored topcoat. Conventional inorganic and organic colored pigments, metallic flakes and powders, such as, aluminum flake and aluminum powders; special effects pigments, such as, coated mica flakes, coated aluminum flakes colored pigments, a combination thereof can be used. Transparent pigments or pigments having the same refractive index as the cured binder can also be used. Such transparent pigments can be used in a pigment to binder weight ratio of 0.1/100 to 5/100. One example of such transparent pigment is silica.

The coating composition of this disclosure can also comprise one or more ultraviolet light stabilizers in the amount of 0.1 % to 10% by weight, based on the weight of the binder. Examples of such ultraviolet light stabilizers can include ultraviolet light absorbers, screeners, quenchers, and hindered amine light stabilizers. An antioxidant can also be added to the coating composition, in the amount of about 0.1% to 5% by weight, based on the weight of the binder.

Typical ultraviolet light stabilizers that are suitable for this disclosure can include benzophenones, triazoles, triazines, benzoates, hindered amines and mixtures thereof. A blend of hindered amine light stabilizers, such as Tinuvin® 328 and Tinuvin®123, all commercially available from Ciba Specialty Chemicals, Tarrytown, New York, under respective registered trademark, can be used.

Typical ultraviolet light absorbers that are suitable for this disclosure can include hydroxyphenyl benzotriazoles, such as, 2-(2-hydroxy-5-methylphenyl)-2H-benzotrazole, 2-(2-hydroxy-3,5-di-tert.amyl-phenyl)-2*H-*benzotriazole, 2[2-hydroxy-3,5-di(1,1-dimethylbenzyl)phenyl]-2H-benzotriazole, reaction product of 2-(2-hydroxy-3-tert.butyl-5-methyl propionate)-2*H*-benzotriazole and polyethylene ether glycol having a weight average molecular weight of 300, 2-(2-hydroxy-3-tert.butyl-5-iso-octyl propionate)-2H-benzotriazole; hydroxyphenyl s-triazines, such as, 2-[4((2,-hydroxy-3-dodecyloxy/tridecyloxypropyl)-oxy)-2-hydroxyphenyl]-4,6-bis(2,4-dimethylphenyl)-1,3,5-triazine, 2-[4(2-hydroxy-3-(2-ethylhexyl)-oxy)-2-hydroxyphenyl]-4,6-bis(2,4-dimethylphenyl)1,3,5-triazine, 2-(4-octyloxy-2-hydroxyphenyl)-4,6-bis(2,4-dimethylphenyl)-1,3,5-triazine; hydroxybenzophenone U.V. absorbers, such as, 2,4-dihydroxybenzophenone, 2-hydroxy-4-octyloxybenzophenone, and 2-hydroxy-4-dodecyloxybenzophenone.

Typical antioxidants that are suitable for this disclosure can include tetrakis[methylene(3,5-di-tert-butylhydroxy hydrocinnamate)]methane, octadecyl 3,5-di-tert-butyl-4-hydroxyhydrocinnamate, tris(2,4-di-tert-butylphenyl) phosphite, 1,3,5-tris(3,5-di-tert-butyl-4-hydroxybenzyl)-1,3,5-triazine-2,4,6(1*H*,3*H*,5*H*)-trione and benzenepropanoic acid, 3,5-bis(1,1-dimethyl-ethyl)-4-hydroxy-C7-C9 branched alkyl esters. Typically useful antioxidants can also include hydroperoxide decomposers, such as Sanko® HCA (9,10-dihydro-9-oxa-10-phosphenanthrene-10-oxide), triphenyl phosphate and other organo-phosphorous compounds, such as, Irgafos® TNPP from Ciba Specialty Chemicals, Irgafos® 168, from Ciba Specialty Chemicals, Ultranox® 626 from GE Specialty Chemicals, Mark PEP-6 from Asahi Denka, Mark HP-10 from Asahi Denka, Irgafos® P-EPQ from Ciba Specialty Chemicals, Ethanox 398 from Albemarle, Weston 618 from GE Specialty Chemicals, Irgafos® 12 from Ciba Specialty Chemicals, Irgafos® 38 from Ciba Specialty Chemicals, Ultranox® 641 from GE Specialty Chemicals and Doverphos® S-9228 from Dover Chemicals.

Typical hindered amine light stabilizers can include *N*-(1,2,2,6,6-pentamethyl-4-piperidinyl)-2-dodecyl succinimide, *N*-(1-acetyl-2,2,6,6-tetramethyl-4-piperidinyl)-2-dodecyl succinimide, N-(2-hydroxyethyl)-2,6,6,6-tetramethylpiperidine-4-ol-succinic acid copolymer, 1,3,5 triazine-2,4,6-triamine, *N,N*"'-[1,2-ethanediybis[[[4,6-bis[butyl(1,2,2,6,6-pentamethyl-4-piperidinyl)amino]-1,3,5-triazine-2-yl]imino]-3,1-propanediyl]]bis[*N,N*"'-dibutyl-*N',N*"'-bis(1,2,2,6,6-pentamethyl-4-piperidinyl)], poly-[[6-[1,1,3,3-tetramethylbutyl)-amino]-1,3,5-trianzine-2,4-diyl][2,2,6,6-tetramethylpiperidinyl)-imino]-1,6-hexane-diyl[(2,2,6,6-tetramethyl-4-piperidinyl)-imino]), bis(2,2,6,6-tetramethyl-4-piperidinyl)sebacate, bis(1,2,2,6,6-pentamethyl-4-piperidinyl)sebacate, bis(1-octyloxy-2,2,6,6-tetramethyl-4-piperidinyl)sebacate, bis(1,2,2,6,6-pentamethyl-4-piperidinyl)[3,5-bis(1,1-dimethylethyl-4-hydroxy-phenyl)methyl]butyl propanedioate, 8-acetyl-3-dodecyl-7,7,9,9-tetramethyl-1,3,8-triazaspiro(4,5)decane-2,4-dione, and dodecyl/tetradecyl-3-(2,2,4,4-tetramethyl-2-oxo-7-oxa-3,20-diazal dispiro(5.1.11.2)henicosan-20-yl)propionate.

The coating compositions of this disclosure can further comprise conventional coating additives. Examples of such additives can include wetting agents, leveling and flow control agents, for example, Resiflow®S (polybutylacrylate), BYK® 320 and 325 (high molecular weight polyacrylates), BYK® 347 (polyether-modified siloxane) under respective registered trademarks, leveling agents based on (meth)acrylic homopolymers; rheological control agents, such as highly disperse silica, fumed silica or polymeric urea compounds; thickeners, such as partially crosslinked polycarboxylic acid or polyurethanes; antifoaming agents; catalysts for the crosslinking reaction of the OH-functional binders, for example, organic metal salts, such as, dibutyltin dilaurate, zinc naphthenate and compounds containing tertiary amino groups, such as, triethylamine, for the crosslinking reaction with polyisocyanates. The additives are used in conventional amounts familiar to those skilled in the art.

The coating compositions according to the disclosure can further contain reactive low molecular weight compounds as reactive diluents that are capable of reacting with the crosslinking agent. For example, low molecular weight polyhydroxyl compounds, such as, ethylene glycol, propylene glycol, trimethylolpropane and 1,6-dihydroxyhexane can be used.

Depending upon the type of crosslinking agent, the coating composition of this disclosure can be formulated as one-pack (1 K) or two-pack (2K) coating composition. If polyisocyanates with free isocyanate groups are used as the crosslinking agent, the coating composition can be formulated as a two-pack coating composition in that the crosslinking agent is mixed with other components of the coating composition only shortly before coating application. If blocked polyisocyanates are, for example, used as the crosslinking agent, the coating compositions can be formulated as a one-pack (1 K) coating composition. The coating composition can be further adjusted to spray viscosity with organic solvents before being applied as determined by those skilled in the art. A 1 K coating composition can comprise melamine or melamine derivatives as crosslinking agent. Coatings produced with such coating composition can be cured at elevated temperatures, such as in a range of from 80°C to 200°C.

In a typical two-pack coating composition comprising two packages, the two packages are mixed together shortly before application. The first package typically can contain the acrylic polymer, the polyesters, and the polytrimethylene ether diol and pigments. The pigments can be dispersed in the first package using conventional dispersing techniques, for example, ball milling, sand milling, and attritor grinding. The second package can contain the crosslinking agent, such as, a polyisocyanate crosslinking agent, and solvents.

The coating composition can be applied over a substrate using coating application techniques or processes, such as brushing, spraying, roller coating, dipping, soaking, electro-coating, or coating application techniques known to or developed by those skilled in the art. The coating composition can be conductive. The coating composition can comprise conductive carrier, one or more conductive pigments, one or more salts, one or more conductive polymers, or a combination thereof. The coating composition can also be charged during coating application process.

The coating composition according to the disclosure can be suitable for vehicle and industrial coating and can be applied by conventional coating techniques. In the context of vehicle coating, the coating composition can be used both for vehicle original equipment manufacturing (OEM) coating and for repairing or refinishing coatings of vehicles and vehicle parts. Curing of the coating composition can be accomplished at ambient temperatures, such as temperatures in the range of 18-35 °C, or at elevated temperatures, 35-250 °C. Typical curing temperatures in the range of 20-80 °C, or 20-60 °C, can be used for vehicle repair or refinish coatings. Typical curing temperatures in the range of 80-250 °C, or 80-200 °C, can be used for OEM coatings.

This disclosure is directed to a process for preparing a modified resin.

In one embodiment, a mixture comprising: a monomer selected from the group consisting of pyrrole, substituted pyrrole, aniline, substituted aniline, thiophene and substituted thiophene; a primer comprising a resin selected from acrylic, polyester, epoxy, melamin/formaldehyde and polyurethane resins; potassium tetraoxalate; and ammonium persulfate is reacted to form a modified resin.

In one embodiment, the epoxy resin is selected from the group consisting of CorMax® VI, Epoxy/Amine resin, and ElectoShield™.

In one embodiment, the resin comprises a polyester resin.

In one embodiment, the monomer comprises pyrrole, and optionally, a substituted pyrrole.

In one embodiment, the monomer comprises thiophene, and optionally, a substituted thiophene.

In one embodiment, the monomer comprises aniline, and optionally, a substituted aniline.

In one embodiment, the modified resin is isolated from the mixture.

In one embodiment, the isolated modified resin is dissolved in an organic solvent (e.g., methyl isobutyl ketone, MIBK) to form a resin-MIBK solution.

In one embodiment, the resin-MIBK solution is coated onto a substrate.

In one embodiment, the resin-MIBL solution is coated onto a substrate via electrodeposition, spray-coating, dip-coating, doctor-coating, or other standard coating method.

In one embodiment, the resin-MIBL coated substrate is heated.

In one embodiment, the reaction of a monomer (pyrrole, thiophene, or aniline), a resin, potassium tetraoxalate, and ammonium persulfate is conducted in the presence of a metal substrate.

In one embodiment, the polymerization of a monomer (pyrrole, thiophene, or aniline) is conducted directly on CRS in the presence of potassium tetraoxalate as dopant and oxidant. Under these conditions, an iron(II) oxalate dihydrate passive/adhesion layer may be formed on CRS, improving the adhesion of the polymer coating.

This disclosure is also directed to modified resins produced by reacting a mixture comprising a monomer (substituted or unsubstituted pyrrole, substituted or unsubstituted thiophene, or substituted or unsubstituted aniline), a resin, potassium tetraoxalate, and ammonium persulfate.

In some embodiments, the modified resins are water-soluble or water-dispersible.

The disclosure is also directed to coating compositions comprising a solvent and a modified resin produced by reacting a mixture comprising a monomer (substituted or unsubstituted pyrrole, substituted or unsubstituted thiophene, or substituted or unsubstituted aniline), a resin, potassium tetraoxalate, and ammonium persulfate.

This disclosure is also directed to coated substrates produced by coating a substrate with a modified resin produced by reacting a mixture comprising a monomer (substituted or unsubstituted pyrrole, substituted or unsubstituted thiophene, or substituted or unsubstituted aniline), a resin, potassium tetraoxalate, and ammonium persulfate.

Although not wishing to be bound by theory, it is believed that the reaction of monomers such as pyrrole, thiophene, aniline and their analogues, with a resin, potassium tetraoxalate, and ammonium persulfate results in a modified resin in which the monomer polymerizes to form an electroconductive polymer, e.g., a polypyrrole, polyaniline, or polythiophene, which is grafted to the resin.

### EXAMPLES

The present invention is further defined in the following Examples. It should be understood that these Examples, while indicating preferred embodiments of the invention, are given by way of illustration only. From the above discussion and these Examples, one skilled in the art can ascertain the essential characteristics of this invention, and without departing from the spirit and scope thereof, can make various changes and modifications of the invention to adapt it to various uses and conditions.

### Testing Procedures

Dry Film Thickness - measured with a Fisherscope® instrument available from HELMUT FISCHER GMBH, Sindelfingen-Maichingen, Germany.

Salt Spray Corrosion Test - performed in a salt spray chamber according to ASTM G 85 Standard Practice for Modified Salt Spray (Fog) Testing.

### Example 1

Pyrrole (6.709 g) was added to 200 g of a mixture of film-forming polymers (Balanced Clear for Waterborne Primer Surfacer DW459, available from E. I. du Pont de Nemours & Co., Wilmington, DE, USA) while stirring using an overhead stirrer and cooling the flask in an ice bath. Potassium tetraoxalate (25.419 g, which had previously been ground up to produce a fine solid) was then added. This mixture was cooled to about 0-2 °C before the addition of 22.818 g of ammonium persulfate. The color changed from light brown to dark black, and the temperature increased to about 40 °C. The temperature quickly decreased, and the mixture was left for 24 h. Methyl isobutyl ketone (MIBK) (400 mL) was added to the flask and heated to 60-70 °C using an oil bath, while stirring constantly. A few small soft chunks of solid material would not dissolve, so the mixture was filtered and used "as is" in the following examples.

### Example 2

A portion of the MIBK solution synthesized according to the process described in Example 1 was drawn down on a cold rolled steel (CRS) substrate to form a coating film using a 5 mil applicator. The coating film was dried in air for 48 h and then was dried in an oven at 180 °C for 20 min to form a coated CRS panel. The thickness of the coating film measured with a Fisherscope® instrument was 25 microns. The coated CRS panels were subjected to a corrosion test in a salt spray chamber according to ASTM G 85 Standard Practice for Modified Salt Spray (Fog) Testing, and their appearance and corrosion resistance was monitored for 1512 h. The coated panels showed no loss of adhesion and no corrosion except the scribe line, even after 1512 h.

### Comparative Example A

A film was drawn down on CRS using an aqueous-based polyester melamine resin (WB primer DW 459), and the same applicator and conditions as described in Example 2.The coated CRS panel was subjected to the same corrosion test described in Example 2. A high degree of rusting of the CRS substrate was observed after 120 h of exposure.

### Example 3 (not according to the invention)

This example illustrates the polymerization and doping of aniline in a low-temperature bake emulsion matrix, with subsequent electro-coating of solutions onto CRS panels.

Dodecylbenzenesulfonic acid (1.9 g) was dissolved into 40 mL water at room temperature in a stainless steel beaker using a high-speed dispersion blade at 1000 RPM for 15 min. This solution was then added to 266 g of low-temperature bake emulsion (ElectroShield™ 24, available from DuPont), pH 6.38, at room temperature over 1 h, with 400-500 RPM overhead stirring. There was no exotherm, and no precipitation was observed. The pH was 6.37. The mixture was cooled to 0 °C in an ice bath, and aniline (1.1 g) was added over 14 min, with no exotherm. The pH was 7.04. After stirring for 10 min, ammonium persulfate (0.78 g) in 10 mL water (which had been previously cooled to 0 °C in an ice bath) was then added over 30 min at 0 °C with 800 RPM stirring. Some black solids could be seen, but the solution was mostly off white (beige) in color. After stirring for 40 min at 0 °C, the solution was beige and still fluidal. After an additional 1 h of stirring at 0 °C, the solution was beige and somewhat thicker. The solution was then warmed to room temperature, and become thicker. Additional water was added to bring original 40% solid concentration to 15%. The solution was rolled to mix for about 18 h, and then electro-coated onto CRS.

## Claims

1. A process for producing an anti-corrosion resin, said process comprising the steps of:
A1) reacting a mixture comprising:
(a) a monomer selected from the group consisting of pyrrole, substituted pyrrole, aniline, substituted aniline, thiophene, substituted thiophene, and a combination thereof;
(b) a primer comprising a resin selected from the group consisting of acrylic, polyester, epoxy, melamin/formaldehyde, polyurethane resins, and a combination thereof;
(c) potassium tetraoxalate; and
(d) ammonium persulfate
to form a modified resin.

2. The process of claim 1, wherein said reaction is conducted in the presence of a metal substrate.

3. The process of claim 1 further comprising the steps of:
A2) isolating the modified resin from the mixture to form an isolated modified resin.

4. The process of claim 3 further comprising the steps of:
A3) dissolving the isolated modified resin in one or more solvents to form a modified resin solution, preferably, the one or more solvents comprise methyl isobutyl ketone (MIBK).

5. An anti-corrosion resin produced by the process of claim 1, 2, 3 or 4.

6. A coating composition comprising the anti-corrosion resin of claim 5 and one or more solvents.

7. A coated article comprising a metal substrate and one or more coating layers, wherein at least one of the coating layers is formed from the anti- corrosion resin of claim 5,
preferably,
said coated article is a vehicle, vehicle part, tank, rail, building, appliance or
appliance part
and/or
said metal substrate comprises one or more metals selected from steel, aluminum, copper, iron, alloys, or a combination thereof.

8. A coating process for producing an anti-corrosion coating layer over a metal substrate, said process comprising the steps of:
B1) applying an anti-corrosion resin over said metal substrate to form a wet coating layer thereon, wherein said anti-corrosion resin comprises a modified resin formed by the process according to claim 1.

9. The coating process of claim 8 further comprising the step of:
B2) curing said wet coating layer at an ambient temperature in a range of from 18°C to 35°C, at an elevated temperature in a range of from 35°C to 250°C, or a combination thereof, to form said anti-corrosion coating layer over said metal substrate.

10. The coating process of claim 8, wherein said anti-corrosion resin is formed in the presence of said metal substrate forming said wet coating layer thereon.

11. The coating process of claim 8, wherein said anti-corrosion resin is formed in the absence of said metal substrate and subsequently applied over said metal substrate forming said wet coating layer thereon.

12. The coating process of claim 11, wherein said anti-corrosion resin is formed by a resin producing process comprising the steps of:
B1a) reacting said mixture in the absence of said metal substrate to form a modified resin;
B1b) isolating said modified resin from the mixture to form an isolated modified resin; and
B1c) mixing said isolated modified resin with one or more solvents to form said anti-corrosion resin,
preferably, the one or more solvents comprise methyl isobutyl ketone (MIBK).

13. The coating process of claim 8, wherein said metal substrate comprises one or more metals selected from steel, aluminum, copper, iron, alloys, or a combination thereof or wherein said metal substrate is cold rolled steel (CRS) free from Zn pre-coating.

14. The coating process of claim 8 , wherein said anti-corrosion resin is applied over said metal substrate by electro-coating, spray coating, drawdown coating, roller coating, dipping, soaking, brushing, or a combination thereof.

15. A coated article produced by the coating process of claim 8, 9, 10, 11, 12, 13 or 14, preferably, said coated article is a vehicle, vehicle part, tank, rail, building, appliance or appliance part.

## Patentansprüche

1. Verfahren zur Herstellung eines Korrosionsschutzharzes, wobei das Verfahren die Schritte umfasst von:
A1) Umsetzen einer Mischung, umfassend:
(a) ein Monomer, das aus der Gruppe ausgewählt ist, bestehend aus Pyrrol, substituiertem Pyrrol, Anilin, substituiertem Anilin, Thiophen, substituiertem Thiophen und einer Kombination davon;
(b) einen Primer, umfassend ein Harz, das aus der Gruppe ausgewählt ist, bestehend aus Acryl-, Polyester-, Epoxid-, Melamin/Formaldehyd-, Polyurethanharzen und einer Kombination davon;
(c) Kaliumtetraoxalat; und
(d) Ammoniumpersulfat,
um ein modifiziertes Harz zu bilden.

2. Verfahren nach Anspruch 1, worin die Reaktion in Gegenwart eines Metallsubstrates durchgeführt wird.

3. Verfahren nach Anspruch 1, ferner umfassend die Schritte von:
A2) Isolieren des modifizierten Harzes aus der Mischung, um ein isoliertes modifiziertes Harz zu bilden.

4. Verfahren nach Anspruch 3, ferner umfassend die Schritte von:
A3) Auflösen des isolierten modifizierten Harzes in einem oder mehreren Lösemitteln, um eine modifizierte Harzlösung zu bilden, wobei das eine oder die mehreren Lösemittel vorzugsweise Methylisobutylketon (MIBK) umfassen.

5. Korrosionsschutzharz, hergestellt durch das Verfahren nach Anspruch 1, 2, 3 oder 4.

6. Beschichtungszusammensetzung, umfassend das Korrosionsschutzharz nach Anspruch 5 und ein oder mehrere Lösemittel.

7. Beschichteter Gegenstand, umfassend ein Metallsubstrat und eine oder mehrere Beschichtungsschichten, worin mindestens eine der Beschichtungsschichten aus dem Korrosionsschutzharz nach Anspruch 5 gebildet ist, wobei vorzugsweise der beschichtete Gegenstand ein/e Fahrzeug, Fahrzeugteil, Tank, Bahn, Gebäude, Gerät oder Geräteteil ist und/oder das Metallsubstrat ein oder mehrere Metalle, ausgewählt aus Stahl, Aluminium, Kupfer, Eisen, Legierungen oder einer Kombination davon, umfasst.

8. Beschichtungsverfahren zur Herstellung einer Korrosionsschutzbeschichtungsschicht auf einem Metallsubstrat, wobei das Verfahren folgende Schritte umfasst:
B1) Auftragen eines Korrosionsschutzharzes auf dem Metallsubstrat, um eine Nassbeschichtungsschicht darauf zu bilden, worin das Korrosionsschutzharz ein modifiziertes Harz umfasst, das durch das Verfahren nach Anspruch 1 gebildet wird.

9. Beschichtungsverfahren nach Anspruch 8, ferner umfassend den Schritt von:
B2) Aushärten der Nassbeschichtungsschicht bei einer Umgebungstemperatur in einem Bereich von 18 °C bis 35 °C, bei einer erhöhten Temperatur in einem Bereich von 35 °C bis 250 °C oder einer Kombination davon, um die Korrosionsschutzbeschichtungsschicht auf dem Metallsubstrat zu bilden.

10. Beschichtungsverfahren nach Anspruch 8, worin das Korrosionsschutzharz in Gegenwart des Metallsubstrates gebildet wird, wodurch die Nassbeschichtungsschicht darauf gebildet wird.

11. Beschichtungsverfahren nach Anspruch 8, worin das Korrosionsschutzharz in Abwesenheit des Metallsubstrates gebildet wird und anschließend auf dem Metallsubstrat aufgetragen wird, wodurch die Nassbeschichtungsschicht darauf gebildet wird.

12. Beschichtungsverfahren nach Anspruch 11, worin das Korrosionsschutzharz durch ein Harzherstellungsverfahren gebildet wird, umfassend die Schritte von:
B1a) Umsetzen der Mischung in Abwesenheit des Metallsubstrates, um ein modifiziertes Harz zu bilden;
B1b) Isolieren des modifizierten Harzes aus der Mischung, um ein isoliertes modifiziertes Harz zu bilden; und
B1c) Mischen des isolierten modifizierten Harzes mit einem oder mehreren Lösemitteln, um das Korrosionsschutzharz zu bilden,
wobei das eine oder die mehreren Lösemittel vorzugsweise Methylisobutylketon (MIBK) umfassen.

13. Beschichtungsverfahren nach Anspruch 8, worin das Metallsubstrat ein oder mehrere Metalle ausgewählt aus Stahl, Aluminium, Kupfer, Eisen, Legierungen oder einer Kombination davon umfasst oder worin das Metallsubstrat kaltgewalzter Stahl (CRS - *cold rolled steel*) frei von einer Zn-Vorbeschichtung ist.

14. Beschichtungsverfahren nach Anspruch 8, worin das Korrosionsschutzharz durch Elektrobeschichtung, Sprühbeschichtung, Drawdown-Beschichtung, Walzenbeschichtung, Eintauchen, Einweichen, Pinselauftrag oder einer Kombination davon auf das Metallsubstrat aufgetragen wird.

15. Beschichteter Gegenstand, welcher durch das Beschichtungsverfahren nach Anspruch 8, 9, 10, 11, 12, 13 oder 14 hergestellt wird, wobei der beschichtete Gegenstand vorzugsweise ein/e Fahrzeug, Fahrzeugteil, Tank, Bahn, Gebäude, Gerät oder Geräteteil ist.

## Revendications

1. Procédé de production d'une résine anticorrosion, ledit procédé comprenant les étapes de :
A1) mise en réaction d'un mélange contenant :
(a) un monomère sélectionné dans le groupe composé du pyrrole, du pyrrole substitué, de l'aniline, de l'aniline substituée, du thiophène, du thiophène substitué et leurs combinaisons ;
(b) un primaire contenant une résine sélectionnée dans le groupe composé de l'acrylique, du polyester, de l'époxy, de la mélamine/formaldéhyde, des résines de polyuréthane et leurs combinaisons ;
(c) du tétraoxalate de potassium ; et
(d) du persulfate d'ammonium
pour former une résine modifiée.

2. Procédé selon la revendication 1, dans lequel ladite réaction est conduite en présence d'un substrat métallique.

3. Procédé selon la revendication 1, comprenant en outre les étapes :
A2) d'isolation de la résine modifiée du mélange pour former une résine modifiée isolée.

4. Procédé selon la revendication 3, comprenant en outre les étapes :
A3) de dissolution de la résine modifiée isolée dans un ou plusieurs solvants pour former une solution de résine modifiée, l'un ou les plusieurs solvants contenant de préférence de la méthyle isobutyle cétone (MIBK).

5. Résine anticorrosion produite par le procédé selon la revendication selon la revendication 1, 2, 3 ou 4.

6. Composition de revêtement comprenant la résine anticorrosion de la revendication 5 et un ou plusieurs solvants.

7. Article revêtu comprenant un substrat métallique et une ou plusieurs couches de revêtement, au moins une des couches de revêtement étant formée de la résine anticorrosion selon la revendication 5,
de préférence,
ledit article revêtu étant un véhicule, une pièce de véhicule, un réservoir, un rail, un bâtiment, un appareil ou une pièce d'appareil
et/ou
ledit substrat métallique contenant un ou plusieurs métaux sélectionnés parmi l'acier, l'aluminium, le cuivre, le fer, des alliages ou leurs combinaisons.

8. Procédé de revêtement pour la production d'une couche de revêtement anticorrosion sur un substrat métallique, ledit procédé comprenant les étapes :
B1) d'application d'une résine anticorrosion sur ledit substrat métallique pour former une couche de revêtement humide dessus, ladite résine anticorrosion comprenant une résine modifiée formée par le procédé selon la revendication 1.

9. Procédé de revêtement selon la revendication 8, comprenant en outre l'étape de :
B2) trempe de ladite couche de revêtement humide à température ambiante dans une plage de 18 °C à 35 °C, à une température élevée dans une plage de 35 °C à 250 °C, ou leurs combinaisons pour former ladite couche de revêtement anticorrosion sur ledit substrat métallique.

10. Procédé de revêtement selon la revendication 8, dans lequel ladite résine anticorrosion est formée en présence dudit substrat métallique formant ladite couche de revêtement humide dessus.

11. Procédé de revêtement selon la revendication 8, dans lequel ladite résine anticorrosion est formée en l'absence dudit substrat métallique et appliquée ensuite sur ledit substrat métallique en formant ladite couche de revêtement humide dessus.

12. Procédé de revêtement selon la revendication 11, dans lequel ladite résine anticorrosion est formée par un procédé de production de résine comprenant les étapes :
B1a) de mise en réaction dudit mélange en l'absence dudit substrat métallique pour former une résine modifiée ;
B1b) d'isolation de ladite résine modifiée du mélange pour former une résine modifiée isolée ; et
B1c) de mélange de ladite résine modifiée isolée avec un ou plusieurs solvants pour former ladite résine anticorrosion, l'un ou les plusieurs solvants contenant de préférence de la méthyle isobutyle cétone (MIBC).

13. Procédé de revêtement selon la revendication 8, dans lequel ledit substrat métallique contient un ou plusieurs métaux sélectionnés parmi l'acier, l'aluminium, le cuivre, le fer, des alliages ou leurs combinaisons ou dans lequel ledit substrat métallique est de l'acier roulé à froid (ARF) dépourvu de pré-revêtement en Zn.

14. Procédé de revêtement selon la revendication 8, dans lequel ladite résine anticorrosion est appliquée sur ledit substrat métallique par électro-revêtement, revêtement par pulvérisation, revêtement par prélèvement, revêtement au rouleau, trempage, imprégnation, brossage ou leurs combinaisons.

15. Article revêtu produit par le procédé de revêtement selon la revendication 8, 9, 10, 11, 12, 13 ou 14, ledit article revêtu étant de préférence un véhicule, une pièce de véhicule, un réservoir, un rail, un bâtiment, un appareil ou une pièce d'appareil.
